# EUROPEAN PATENT APPLICATION

(11) **EP 1 732 023 A1**
(43) Date of publication of application: **13.12.2006**
(21) Application number: 05291097.3
(22) Date of filing: 20.05.2005
(51) Int. Cl.: G06F 21/00, H04L 29/06

(54) **DRM system for devices communicating with a portable device**

(71) Applicant: Axalto SA, 92120 Montrouge (FR)
(72) Inventor: Mahalal, Ilan, 92120 Montrouge (FR); Tales, Alain, 92120 Montrouge (FR)
(74) Representative: Jacquot, Ludovic R. G.

(57) **Abstract**

An apparatus that communicates with a portable device wherein the portable device implements a Rights Issuer server that is able to deliver Rights Objects to the apparatus according to an adapted DRM standard among one or several possible DRM standards implemented in the portable device.

## Description

### BACKGROUND OF THE INVENTION

The present invention generally relates to Digital Rights Management (DRM) in devices communicating with portable devices, and more specifically to a mechanism that allows a Rights Issuer to be sure that his conditions for access to digital content by a device communicating with a portable device are enforced.

"Digital Rights Management" (DRM) is a set of technologies that provides the means to control the distribution and consumption of the digital media and other digital content. It allows content providers to define conditional access to the content. Examples for such conditions are "the content may only be rendered if it has not yet been rendered more than x times" or "the content may be rendered if the current date is between day y and day z".

A DRM system enables "Content Issuers" to distribute protected content and "Rights Issuers" to issue to a user rights objects comprising the conditions for access to or usage of the delivered protected media (usage rights), which may contain permissions and/or constraints. The protection of the content is usually achieved by encryption. The decryption key or any other information necessary to access the content is also comprised by the rights objects.

Most DRM systems rely on trusted hardware. While protected (encrypted) content may be freely distributed, rights objects comprising the information necessary to access the content (e.g. the decryption keys) are only delivered to devices which are believed to be "DRM compliant", which means that (1) the device accesses the content only if the access is covered by the usage rights comprised by the rights object, and 2 content cannot be extracted from the device and distributed to others in unprotected form, e.g. decrypted. In the examples of this document, the device accessing the digital content is a mobile telephone and the portable device with which the device accessing the content communicates is a smart card. Smart cards are intrinsically secure computing platforms ideally suited for providing enhanced security and privacy functionality to applications. At the same time, they provide an isolated processing facility capable of using this information without exposing it within the host environment. They are therefore ideal candidates for trusted, DRM compliant devices. However, the invention can equally be applied to any other device accessing digital content like e.g. a PDA, a PC, or a consumer electronics device with multimedia rendering capabilities, and to any other portable device, like e.g. a Multi Media Memory card.

### 2 What is already known?

There is a growing need for DRM systems in the mobile industry to enable operators and content providers to make digital content available to consumers in a controlled manner. The handset may already be connected to a smart card like a SIM (Subscriber Identity Module) used in GSM.

In some DRM solutions that apply to mobile handsets, i.e. OMA (Open Mobile Alliance) DRM, a Rights Issuer can authenticate a handset as DRM compliant and then deliver rights objects to the handset. The rights objects then are stored and managed on the handset.

A Rights Issuer is implemented as a remote server to which the user connects with his DRM compliant handset. The Rights Issuer server and the user device may use a DRM specific protocol for mutual authentication and then Rights Objects are delivered to the user's handset. A DRM Agent in the handset uses these Rights Objects to derives execution rights for media or application that the user downloaded and paid for

### 3 What problem needs to be solved?

Within current DRM solutions, rights objects are associated with a device (the handset), and not with a user. This means that if the user changes handset he has to ask the Rights Issuer to install the rights objects again - on the new device.

This problem is overcome if the rights objects are stored and managed on the smart card communicating with the device. Since the smart card usually is personalized, the rights objects can be associated directly with the user identity. Portability of the rights objects when using other handsets is facilitated. Furthermore, if the smart card is hacked, a new generation of smart cards with new security features can be deployed very rapidly, for little extra costs. It is far cheaper to replace the smart card than to replace the handset.

Another problem to overcome is the diversity of existing DRM solutions, which forces a Rights Issuer to implement most of them. If a user buys execution rights for several different devices that he owns they may be managed by different DRM solutions even though it's the same user who bought them.

### 4 How is the problem solved?

The solution for the above problems is to implement one or several Rights Issuer micro servers within the portable device itself and not as a remote full-blown server on the network. A local micro Rights Issuer server within the portable device need to manage only the Rights for a single user and not for minion of users, as a real network Rights Issuer server.

The local Rights Issuer within the portable device is storing all the Rights Objects that the user acquired for one or several of his handsets or DRM compliant devices. The format of the Rights Objects stored in the portable device may be proprietary or standard but the local Rights Issuer within the portable device will transform them to a standard format that the user's handset need before delivering them to it. This means that the local Rights Issuer within the portable device may implement several DRM protocols and be capable to deliver to the Rights Object format that a given handset needs.

This solution solves the issue of Rights Objects portability between devices since all the user's rights objects are now stored within the portable device and are delivered locally to the user's handsets or DRM compliant devices. When the user changes his handsets he does not need to connect to a remote Rights Issuer server and ask that his acquired Rights objects be delivered to the new device. The Rights objects are delivered locally to the user's new handset with the standard protocol that the new handset implements. Several constraints may be expressed in the delivered Rights Objects that are derived from the initial Rights Objects that are stored within the portable device. Some of them may include:
- The delivered Rights Object is valid only if the portable device is connected to the handset or DRM compliant device to which the Rights Objects are intended to be delivered. This ensures that the user will not be able to install execution rights in handsets that do not belong to him and that they stay valid when he removes the portable device from them. The connection between the devices may be a wired or wireless connection.
- The delivered Rights Object may be valid for only one execution of the media in the handset and then a new Rights Object needs to be requested. This is useful when the initial Rights Object stored in the portable device allows N executions but the execution counter is implemented internally within the portable device. Each time that the portable device delivers a Rights Object to the handset it decrement the executions counter internally. This ensures a complete portability of counter based rights across all the user's handsets or DRM complaint devices.
- The delivered Rights Object may be valid for only a limited time slot (e.g. 1 minutes) and then a new Rights Object needs to be requested. This is useful when the initial Rights Object stored in the portable device allows execution rights for a broadcast video for example. This ensures that the portable device is connected to the handset all the time and also enable the delivery of different decryptions keys for each time slot.
-

### 5 Detailed description of a practical example

The following example shows a scenario with a DRM compliant mobile handset with an embedded smart card. The user downloads media and applications to his handset and then connects to a remote Rights Issuer to buy execution rights. For example, the user downloaded protected audio files and want to acquire the rights to play them. The downloaded Rights Object will also contain the decryption keys that will allow the DRM agent in the handset to decrypt the content and then play it.

The remote Rights Issuer can deliver the Rights Object in two different ways:
- Deliver a protected Rights Object that the handset cannot directly use but needs to install in the portable device
- Deliver the Rights Object directly to the portable device by means of a standard or proprietary end to end secure protocol between the two

Once the Rights Objects are delivered to the portable device the user's handset can connect to the Rights Issuer server in the portable device and get the Rights Objects in the format that can interpreted by its DRM agent.

Whenever the content is going to be broadcasted to the device using technology such as DVB-H, t-DMB, S-DMB, DAB or any other type of broadcasting technology, the DRM architecture will require a 3 layer cryptographic architecture as opposed to two layer used in a point to point distribution mode.

The schema underneath describes a typical architecture of a DRM system in broadcast environment

In a broadcast mode environment, when a user subscribes to a broadcast service, a right object containing the authorization to access the service is issued by the remote right issuer to the user.

The remote Rights Issuer can deliver the Rights Object in two different ways:
- Deliver to the handset a protected Rights Object that the handset cannot directly use but needs to install in the portable device
- Deliver the Rights Object directly to the portable device by means of a standard or proprietary end to end secure protocol between the two.

The content is encrypted with traffic keys. This keys are delivered with the broadcasted content through encrypted "traffic encryption messages",
The traffic encryption messages as they arrive are transferred to the portable device.
If the portable device has the right object giving access to the service, the right issuer in the portable device issues to the handset a right object containing the traffic key in the format that can be interpreted by its DRM agent.

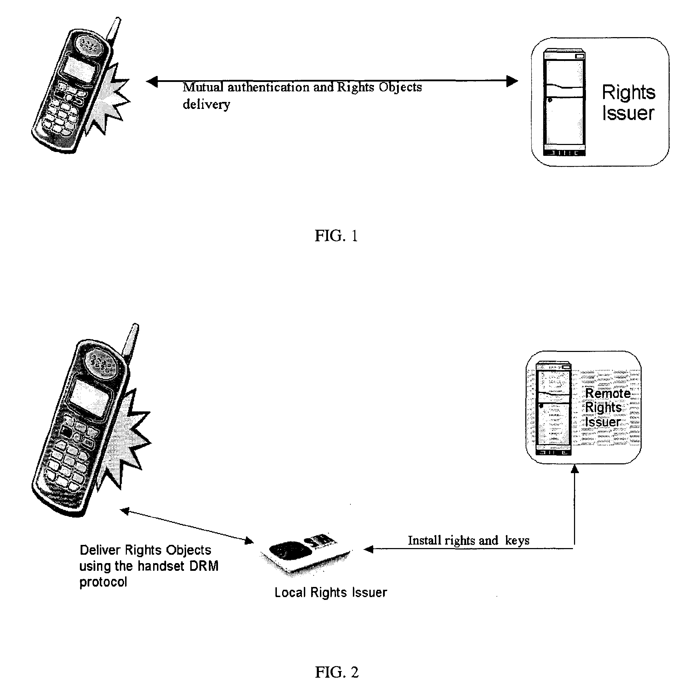

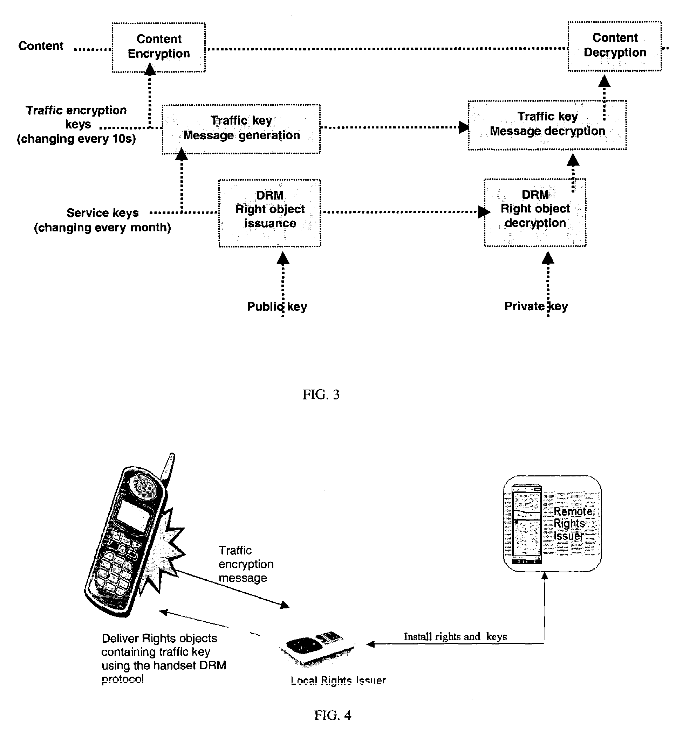

## Claims

1. An apparatus that communicates with a portable device wherein the portable device implements a Rights Issuer server that is able to deliver Rights Objects to the apparatus according to an adapted DRM standard among one or several possible DRM standards implemented in the portable device.

2. A portable device as recited in the claim 1 wherein the portable device implements several DRM Rights Issuer server protocols that enable it to adapt to different apparatus that implement different DRM standards.

3. A portable device as recited in the claim 1 wherein the Rights Issuer server implemented in the portable device can be managed over the air with proprietary or standard secure protocols.

4. A portable device as recited in the claim 1 wherein the Rights Issuer server implemented in the portable device generates Rights Objects based on other initial Rights Objects, or authorization data, that were delivered to it from a remote Rights Issuer server or authorization server.

5. A portable device as recited in the claims 1 and 4 wherein the Rights Issuer server implemented in the portable device and the remote Rights Issuer or authorization server can mutually authenticate each other end to end.

6. A portable device as recited in the claim 1 wherein the Rights Issuer server implemented in the portable device can manage counter based Rights Objects by delivering several Rights Objects, each enabling only one execution on the apparatus, and then decrementing a counter in the portable device upon the delivery of each Rights Object to the apparatus, until the counter is set to zero.

7. A portable device as recited in the claim 1 wherein the Rights Issuer server implemented in the portable device can deliver a series of Rights Objects to the apparatus, each is valid for a limited time frame, based on a single Rights Object or authorization data stored in the portable device.

8. A portable device as recited in the claims 1 wherein the Rights Object delivered by the Rights Issuer server implemented in the portable device indicates that another Rights Object can be subsequently delivered after the expiration of the delivered one.

9. A portable device as recited in the claim 1 wherein the Rights Issuer server implemented in the portable device can enable a secure backup of all its Rights Objects, or authorization data, on a local PC or a remote server by exporting this data encrypted by credentials that are securely stored in the portable device.

10. A portable device as recited in the claim 1 wherein the Rights Issuer server implemented in the portable device can deliver Rights Objects only to a limited list of apparatus that can be identified or authenticated by the portable device.

11. A portable device as recited in the claim 1 wherein the Rights Issuer server implemented in the portable device can simultaneously deliver Rights Objects to several apparatus if a wired or wireless link can be established with all at the same time.

12. A portable device as recited in the claim 1 wherein the Rights Objects delivered by the Rights Issuer server implemented in the portable device indicate that execution rights are valid only if the portal device is currently connected to the apparatus in a wired or wireless manner.

13. A portable device as recited in the claim 1 wherein the portable device is a smart card.

14. A portable device as recited in the claim 1 wherein the portable device is a Multi Media Memory card.

15. An apparatus as recited in the claim 1 wherein the apparatus is a mobile phone.

16. An apparatus as recited in the claim 1 wherein the apparatus is a PDA.

17. An apparatus as recited in the claim 1 wherein the apparatus is a PC.

18. An apparatus as recited in the claim 1 wherein the apparatus is a consumer electronic device with multimedia rendering capabilities and possibly networking capabilities.
